# EUROPÄISCHE PATENTSCHRIFT

(11) **EP 2 555 361 B1**
(45) Veröffentlichungstag und Bekanntmachung des Hinweises auf die Patenterteilung: **29.04.2015**
(21) Anmeldenummer: 11176628.3
(22) Anmeldetag: 04.08.2011
(51) Int. Cl.: H02G 3/04

(54) **Vorrichtung für die Medien- und Energieversorgung mit einer Mediensäule**
Device for supplying media and energy with a media column
Dispositif pour l'alimentation en liquide et en énergie à l'aide d'une colonne de milieu

(43) Veröffentlichungstag der Anmeldung: 06.02.2013
(73) Patentinhaber: Zurecon AG, 8003 Zürich (CH)
(72) Erfinder: Pfluger, Gerd, CH-4625 Oberbuchsiten (CH)
(74) Vertreter: Rutz & Partner

(56) Entgegenhaltungen:
- EP-A2- 2 262 069
- DE-A1- 10 314 685
- DE-U1-202004 008 548
- DE-U1-202007 004 239
- NL-A- 8 200 247

## Beschreibung

Die Erfindung betrifft eine mit einer Mediensäule versehene Vorrichtung für die Medien- und Energieversorgung nach dem Oberbegriff des Patentanspruchs 1.

Um Arbeitsplätze in Labors mit Strom, Informationstechnik, Gas, Wasser, Druckluft, Vakuum, usw. zu versorgen, und um Abluft und Wasser oder dergleichen abzuführen, ist es bekannt, Medienzellen, Mediensäulen oder Medienampeln für die Laborarbeitsplätze vorzusehen. Bei der Planung der Infrastruktur eines Labors sind dabei zahlreiche und, je nach Blickwinkel, teilweise auch widersprüchliche Anforderungen zu berücksichtigen.

Fragen, die bei der Laborplanung typischerweise auftreten, sind z.B. in [1], Dr. Gert Richter, Bernd Schoeler, Problemzonen im Labor, http://www.labo.de, Juli 2011, beschrieben. Als grösste Herausforderung ist hervorgehoben, die Anordnung der Medienleitungen an der Laborraumdecke mit dem ästhetischen Anspruch von Architekten, Nutzer und Auftraggeber in Einklang zu bringen; wobei das Verstecken der Technik oberhalb einer abgehängten Decke die Problemzone gewöhnlich nur noch verschärfe. Gemäss [1] besteht die eigentliche Problematik darin, die Technik an der Decke dort zu entflechten, wo die höchsten Einrichtungen, also die Abzüge, stehen, um eine möglichst grosse lichte Raumhöhe zu erreichen. Aber gerade an den Laborraumwänden, wo die Abzüge stehen sollen, würden häufig die gesamten Technikleitungen geplant. Zuluft- und Abluftleitungen, Kabelpritschen, würden möglichst nahe der Flurwand geführt, um einen sich öffnenden Raum in Richtung Fenster zu gestalten. Zur Vermeidung von Problemzonen im Labor wird in [1], abschliessend die Kommunikation zwischen dem Bauherren, allen Planungsbeteiligten und allen Ausführenden in jeder Phase des Projektes empfohlen.

Zu beachten ist jedoch, dass die Grundlage der Diskussion zwischen den Projektbeteiligten jeweils das Konzept des Laborbauers ist, welches bereits erhebliche Restriktionen insbesondere für die Medienführung mit sich bringt, die der Auftraggeber mit Erteilung des Auftrags an den Laborbauer akzeptiert hat. Zu beachten ist ferner, dass einer der wichtigsten Nutzer der zu erstellenden Einrichtung ein späterer Anwender ist, der an der Kommunikation während der Projektphase nicht beteiligt ist und zu einem späteren Zeitpunkt, z.B. nach Änderungen der Arbeitsprozesse, gegebenenfalls Veränderungen an der Einrichtung vornehmen muss. Bekannte Konzepte für Laboreinrichtungen weisen jedoch typischerweise den Mangel auf, dass der spätere Anwender bei der Planung später erforderlicher Änderungen erheblichen Einschränkungen unterworfen ist oder Änderungen nur mit erheblichen Kosten durchführen kann.

In [2], DE 101 27 272 A1, ist eine Einrichtung mit einer Installationsstation beschrieben, welche über ein Tragelement mit quer dazu verlaufenden Auslegern verbunden ist, die von Stützen getragen sind, die auf dem Laborboden aufgestellt sind. Das Tragelement, in dem die Medienleitungen von der Installationsstation zu den Auslegern geführt sind, ist einerseits von der Installationsstation und andererseits von einer Stütze der Ausleger getragen. Diese Einrichtung, mit der Installationsstation und den für das Tragelement und die Ausleger vorgesehenen Stützen, beansprucht relativ viel Raum innerhalb des Labors. Besonders nachteilig ist, dass die Einrichtung auf dem Boden steht und daher wesentliche Einschränkungen für die weitere Realisierung der Infrastruktur des Labors mit sich bringt.

Diese Nachteile werden mit der aus [3], EP 1684393 A1, bekannten Vorrichtung vermieden, die mit der Decke des Labors verbunden ist. Diese Vorrichtung besteht aus Deckenstützen, die mit Längs- und/oder Querprofilen zu einem räumlichen Fachwerk verbunden sind, welches dem Führen bzw. Halten von Medienleitungen und/oder dafür vorgesehenen Tragvorrichtungen dient. Unterhalb des Fachwerks wird normalerweise eine abgehängte Decke vorgesehen, welche das Fachwerk vom Rest des Raumes trennt. Die Medienversorgung erfolgt typischerweise über sogenannte Mediensäulen, die von der Decke nach unten zum Arbeitsplatz geführt sind. An diesen Mediensäulen kann der Laborant seine Geräte anschliessen.

Vorteilhaft bei dieser Vorrichtung ist, dass der Laborboden für die Installation dieser Vorrichtung nicht beansprucht und für die weitere Infrastruktur des Labors freigehalten wird. Ferner können beliebige Medienleitungen fachmännisch verlegt werden, die innerhalb von Labormöbeln nicht installierbar sind. Nachteilig ist hingegen der hohe Raumbedarf. Durch die Installation einer abgehängten Decke wird ein erheblicher Teil des Raums in Anspruch genommen, ohne dass daraus ein direkter Nutzen resultiert. Insbesondere in Labors, in denen möglichst viel Freiraum, z.B. für weitere Installationen, gewünscht wird, resultieren dadurch wesentliche Nachteile.

Aus [4], EP 2262069 A2, ist eine Vorrichtung für die Medien- und Energieversorgung mit einer Versorgungsstation bekannt, die einerseits als Labormöbel und andererseits der Führung von Medienleitungen zu Anschlüssen dient. Auf die Verwendung einer Mediensäule kann dabei verzichtet werden. Die Kombination einer Versorgungsstation mit einem Labormöbel und Kabelführungsvorrichtungen zu einer Einheit bringt Vorteile mit sich, führt jedoch zu wesentlichen konzeptionellen Einschränkungen, die von einem Anwender unter Umständen nicht erwünscht sind. Ein Anwender, der das Labor z.B. mit eigenen Labormöbeln einrichten möchte, wird diesem Konzept unter Umständen nicht folgen.

Weitere Vorrichtungen für die Medien- und Energieversorgung sind aus [5], DE 10314685 A1, und [6], EP 1916749 A2, bekannt, bei denen das der Medienversorgung dienende Teil, nämlich ein der Aufnahme von Medienleitungen dienender Medienkanal, mittels Hängehaltern von der Decke abgehängt ist. Zur Versorgung der Arbeitsplätze ist der Medienkanal mit Mediensäulen versehen, über die einzelne Medienleitungen zu Anschlussfeldern geführt sind. Nachteilig bei den in [5] und [6] beschriebenen Vorrichtungen ist der relativ hohe Installationsaufwand, insbesondere der Aufwand zur Installation des Medienkanals. Weiterhin resultiert bei diesen Vorrichtungen eine nur geringe Flexibilität. Sofern ein weiterer Arbeitsplatz eingerichtet werden soll, muss der aufwendig gestaltete Medienkanal gegebenenfalls mit einem Richtungswechsel zum neuen Standort geführt und dort mit einer Mediensäule versehen werden.

Mediensäulen werden zudem meist von spezialisierten Herstellern geliefert. Die Abmessungen der Mediensäulen werden möglichst klein gehalten, um universell eingesetzt werden zu können. Dadurch resultiert eine beschränkte Flexibilität, so dass die Gestaltungsmöglichkeiten des Anwenders auch hier eingeschränkt sind.

Aus der DE202004008548U1 ist eine Medienversorgungseinrichtung für mehrere in einem Raum angeordnete Arbeitsplätze bekannt, die mehrere unterhalb der Decke des Raumes, oberhalb einer normalen Greifhöhe anbringbaren Haltevorrichtungen aufweist, an denen jeweils ein mit Medienanschlüssen ausgestattetes Bewegungselement gelagert ist. Die Haltevorrichtungen bilden mit den ihnen zugeordneten Bewegungselementen Medieneinheiten, wobei sich zwischen benachbarten Medieneinheiten eine Horizontalkonsole erstreckt.

Der vorliegenden Erfindung liegt daher die Aufgabe zugrunde, die Nachteile der beschriebenen Lösungen zu vermeiden und eine verbesserte Vorrichtung für die Medien- und Energieversorgung zu schaffen, die eine Mediensäule aufweist.

Die Vorrichtung, die mit verhältnismässig tiefen Kosten und geringem Aufwand herstellbar und installierbar sein soll, soll den zur Verfügung gestellten Raum optimal nutzen und die Installation der weiteren Laborinfrastruktur nicht behindern.

Die erfindungsgemässe Vorrichtung soll es dem Architekten und dem Bauherrn erlauben, das Labor funktionell und ästhetisch nach ihren Vorstellungen einzurichten. Der Laborbauer soll die Laboreinrichtung mit geringem Aufwand herstellen und installieren können. Das Wartungspersonal soll erforderliche Wartungsarbeiten und Reparaturarbeiten mit geringem Aufwand ausführen können. Ein späterer Anwender soll kleinere und grössere Änderungen der Infrastruktur mit geringem Aufwand durchführen können.

Die Vorrichtung soll zudem möglichst wenig Raum in Anspruch nehmen, so dass für Labormöbel, insbesondere für Abzüge, möglichst viel Raum zur Verfügung steht.

Diese Aufgabe wird mit einer Vorrichtung gelöst, welche die in Anspruch 1 angegebenen Merkmale aufweist. Vorteilhafte Augestaltungen der Erfindung sind in weiteren Ansprüchen angegeben.

Die Vorrichtung, die für die Medien- und Energieversorgung von Arbeitsplätzen in einem Labor vorgesehen ist, umfasst wenigstens eine Mediensäule, in der Medienleitungen zu Anschlüssen geführt sind.

Erfindungsgemäss weist die Mediensäule eine Säulenstruktur auf, die mit vorzugsweise wenigstens drei Deckenstützen mit der Decke des Labors verbunden ist, und die einen oberen und einen unteren Säulenabschnitt umfasst, wobei im oberen Säulenabschnitt wenigstens ein Ausleger mit der Säulenstruktur verbunden ist, der wenigstens einen Kanal mit Medienleitungen trägt, von denen zumindest einzelne hinunter zu den Anschlüssen für die Medienleitungen im unteren Säulenabschnitt geführt sind, der mit mehreren Panelen verkleidet ist, von denen eine erste Paneele mit den Anschlüssen versehen und eine zweite Paneele lösbar, vorzugsweise schwenkbar mit der Säulenstruktur verbunden ist.

Das vorliegende Konzept stellt die Mediensäule in den Mittelpunkt der Laboreinrichtung und beschränkt den Teil der Infrastruktur, welcher für die Zufuhr der Medien zu den Mediensäulen vorgesehen ist, auf ein notwendiges Minimum. Auf eine voluminöse abgehängte Decke, abgehängte Medienkanäle oder Stationen mit Kabelführungsvorrichtungen kann verzichtet werden, weshalb der Laborraum nur in einem Ausmass beansprucht wird, wie es für die Medienverteilung zwingend erforderlich ist. Hingegen bildet die Mediensäule, die früher ein peripheres Element darstellte, ein zentraler Baustein der Vorrichtung. Die Mediensäule ist neu das zentrale Strukturelement der Laboreinrichtung, welches nicht nur die Medien dem Anwender zugänglich macht, sondern die gesamte Vorrichtung trägt, mittels der die Medienkanäle und Medienleitungen im Labor geführt werden. Ein weiterer Vorteil dieses Konzeptes ist der Umstand, dass die Mediensäulen aufgrund ihrer erweiterten Funktion als tragende Elemente der Laboreinrichtung an Volumen gewinnen, welches vorteilhaft für die Medienverteilung zu den Anschlüssen genutzt wird. Für den Anwender und den Installateur sowie das Wartungspersonal ergeben sich erleichterte Möglichkeiten zur Gestaltung, Änderung und Wartung der Mediensäule. Hingegen rückt die weitere Infrastruktur in den Hintergrund. Beim Ausbau der Infrastruktur ergibt sich der Vorteil, dass sich mit der Installation einer zusätzlich benötigten Mediensäule automatisch die für die Installation der Medienkanäle erforderlichen Montagepunkte ergeben. Beim erfindungsgemässen Konzept folgt die Infrastruktur somit den Wünschen des Anwenders und nicht der Anwender den Vorgaben der Infrastruktur.

Insgesamt resultiert ein Konzept, welches nicht mehr Hersteller-orientiert, sondern Anwender-orientiert ist. Im Gegensatz zum Hersteller, ist der Anwender nicht daran interessiert voluminöse Installationen, wie abgehängte Decken zu installieren. Hingegen ist die Mediensäule für den Anwender von zentralem Interesse, weshalb der Anwender der Mediensäule gerne mehr Raum zuordnen wird. Dafür erhält der Anwender nicht nur räumliche Vorteile, sondern auch die Möglichkeit, die Mediensäule mit zu gestalten. Die eingangs genannte Kommunikation zwischen den Beteiligten an einem Projekt fokussiert sich somit auf Fragen, die für den Anwender relevant sind, während Fragen des Installateurs deutlich in den Hintergrund treten. Besonders wesentlich ist, dass ein am Projekt nicht beteiligter späterer Anwender, seine Wünsche zu einem späteren Zeitpunkt mit geringem Aufwand durch Umgestaltung oder Verschiebung der Mediensäule oder auch durch Einbindung einer weiteren Mediensäule in die Infrastruktur mit geringem Aufwand realisieren kann.

Die Säulenstruktur kann vorteilhaft aus Hohlprofilen, wie Querstreben und Längsstreben aufgebaut werden. Die Längsstreben bilden mit den Deckenstützen vorzugsweise eine Einheit, so dass mit wenigen Elementen eine stabile und tragfähige Säulenstruktur resultiert. Die Hohlprofile der Deckenstützen führen vorzugsweise bis an das untere Ende der Mediensäule, weshalb die Hohlprofile nicht nur die tragenden Elemente der Mediensäule sind, sondern auch dessen Struktur und Festigkeit bestimmen. Die vorzugsweise vorgesehenen Querstreben können lösbar oder fest mit den Deckenstützen verbunden sein.

Die Mediensäulen sind belastbar und tragfähig und können daher für weitere Zwecke vorteilhaft verwendet werden. Beispielsweise können zwei Mediensäulen als Regalwände dienen, zwischen denen Regale eingesetzt werden. In Kombination mit der erfindungsgemässen Vorrichtung können beliebige Labormöbel nach Wunsch des Anwenders eingesetzt werden, wobei die erfindungsgemässe Vorrichtung die zusätzlich Möglichkeit bietet, Mobiliar, wie Regale oder ganze Kästen, an den Mediensäulen zu befestigen.

Die dem Tragen der Medien Kanäle dienenden Ausleger werden einseitig an einer oder beidseitig je an einer Deckenstütze einer Mediensäule fest oder lösbar befestigt. Vorzugsweise wird vorgesehen, dass Ausleger in unterschiedlichen Höhen oder Ebenen montierbar sind. Dies erlaubt es, kommende und gehende Medienkanäle auf unterschiedlichen Höhen zu montieren. Insbesondere erlaubt es dies jedoch auch, die Medienkanäle während der Installation auf einer tieferen Ebene zu lagern, um die Medienleitungen bequem bearbeiten zu können. Nach Abschluss der Arbeiten können die Medienkanäle auf die höchste Ebene angehoben werden, so dass der Raum unterhalb der Decke weitgehend frei gehalten werden kann.

Vorzugsweise wird im oberen Säulenabschnitt eine mehrarmige Medienplattform vorgesehen, der die Medienleitungen oder dafür vorgesehene Medienkanäle zugeführt werden. Auf diese Weise gelingt es, die Medienkanäle vorteilhaft mit der Mediensäule zu koppeln. Die Medienkanäle liegen auf der Medienplattform auf und werden sicher, vorzugsweise über eine Distanz von zum Beispiel 5 cm bis 15 cm verschiebbar gehalten, um Toleranzen auszugleichen. Vorzugsweise werden die Medienplattform und die Medienkanäle mit zueinander korrespondierenden Kopplungselementen versehen, welche verhindern, dass sich ein Kanal von der Medienplattform lösen kann. Auch bei der Verwendung der Medienplattform wird vorzugsweise vorgesehen, dass diese auf eine tiefere Ebene abgesenkt werden kann, um Montagearbeiten einfacher auszuführen zu können. Beispielsweise werden beispielsweise Abzweiger vorgesehen, von denen Medienleitungen vom Stammleitungen weg geführt und durch eine Öffnung in der Medienplattform in den unteren Säulenabschnitt geführt werden können.

Die Medienkanäle können aus verschiedenen Materialien gefertigt sein. Beispielsweise sind die Kanäle aus Gittermaterial mit Längsstegen und Querstegen oder aus gegebenenfalls gelochtem Blech vorteilhaft verwendbar.

Während der untere Säulenabschnitt durch die Panelen abgedeckt ist, wird vorzugsweise auch der obere Säulenabschnitt nach der Installation der Medienleitungen durch eine Verkleidung abgedeckt. Dies gelingt vorteilhaft mit wenig Verkleidungsmaterial, nachdem die Medienkanäle nach der Installation in die höchste Ebene verschoben wurden. Bei dieser Ausgestaltung wird der wesentliche Teil der Mediensäule durch die Panelen abgedeckt. Die Verkleidung im Deckenbereich der Mediensäule kann in der Folge die Form eines einfachen Kragens aufweisen, der die Mediensäule umläuft und die zugeführten Medienkanäle überdeckt.

Die Mediensäule, insbesondere der untere Säulenabschnitt, weist vorzugsweise die Form eines geraden Prismas auf, dessen Grundseite ein Dreieck, ein Quadrat oder ein Hexagon bildet und dessen Seitenflächen durch die Panelen gebildet werden.

Besonders vorteilhaft ist die Verwendung eines Prismas mit drei Seiten von denen die erste Seite mit den Anschlüssen der Medienleitungen versehen wird, die zweite als Tür ausgestaltet ist und die dritte als Montageelement, zum Beispiel als Regalwand dient.

Vorzugsweise bildet die Grundfläche ein Dreieck mit zwei gleichen Schenkeln, die vorzugsweise einen Winkel von 90° einschliessen, wobei die dazwischen eingeschlossene grösste Paneele mit den Anschlüssen der Medienleitungen und gegebenenfalls weiteren Bedienelementen versehen wird.

Die benachbarten Panelen werden vorzugsweise durch Scharniere miteinander verbunden, so dass sie leicht installiert und deinstalliert werden können und nur wenige weitere Montagemittel erfordern. Die miteinander gelenkig verbundenen Panelen können in der Art eines Mantels um die Säulenstruktur gelegt werden, weshalb eine äusserst einfache Installation und der Installation der Mediensäule resultiert.

Vorzugsweise werden wenigstens zwei unterschiedliche Typen von Mediensäulen, nämlich ein "elektrischer Typ" und ein "chemischer Typ" eingesetzt. Durch die resultierende Medientrennung werden zahlreiche Vorteile erzielt. Vorzugsweise wird für jeden Arbeitsplatz der Zugang zu den erforderlichen Typen der Mediensäulen vorgesehen, wobei zwei oder mehrere Arbeitsplätze eine Mediensäule eines bestimmten Typs gemeinsam nutzen können. Durch die Trennung der Medien resultiert eine erhöhte Sicherheit. Gleichzeitig können die Mediensäulen einfacher gewartet werden, da der spezialisierte Ingenieur nicht mit fremden Medien konfrontiert ist.

Zur Montage der Mediensäule werden diese an den vom Anwender gewünschten Positionen installiert, indem die Kopfstücke der Deckenstützen mittels Schrauben mit der Decke verbunden werden. Vorzugsweise werden die Deckenstützen mit einer gemeinsamen Montageplatte verbunden, die ihrerseits mit der Decke 2 verbunden wird. Die Montageplatte wird vorzugsweise mit Montageschlitzen versehen, welche es erlauben, die installierte Mediensäule vor dem Festziehen der Montageschrauben noch zu verschieben. Sofern eine erhöhte Flexibilität gewünscht ist, werden die Deckenstützen, gegebenenfalls über die Montageplatte und eine Verschiebevorrichtung mit der Decke verbunden. Bei dieser Ausgestaltung kann eine Mediensäule über einen weiteren Bereich zum Beispiel entlang einer Schiene verschoben werden.

Vorzugsweise werden an allen Prismenkanten der Mediensäule Deckenstützen vorgesehen, so dass diese, gegebenenfalls via die Montageplatte, fest in der Decke verankert und auch unter Last senkrecht ausgerichtet sind. Es ist jedoch möglich, dass nur eine reduzierte Anzahl von Deckenstützen, zum Beispiel nur eine Deckenstütze vorgesehen ist. In diesem Fall sind die Deckenstütze und die Säulenstruktur derart auszugestalten, dass die Mediensäule auch unter Belastung senkrecht ausgerichtet bleibt.

Nachfolgend wird die Erfindung anhand von Zeichnungen näher erläutert. Dabei zeigt:
- Fig. 1: eine aus der EP 1684393 A1 bekannte Vorrichtung mit einer Deckenstruktur mit Längsstreben 10012 und Querstreben 10013, die über Deckenstützen 10111 mit einer Decke 2 verbunden sind und eine abgehängte Decke 22 halten, über der Medienleitungen 91, 92, 93 zu Mediensäulen 1000 geführt sind, die mit den Längsstreben 10012 oder Querstreben 10013 verbunden sind;
- Fig. 2: eine erfindungsgemässe Vorrichtung 1 mit zwei dem Tragen von Medienkanälen 114 dienenden Mediensäulen 10, von denen die erste einen Arbeitsplatz 81 mit elektrischen Medien und eine zweite Mediensäule 10 einen Arbeitsplatz 82 mit flüssigen und gasförmigen Medien versorgt;
- Fig. 3: die Vorrichtung 1 von Figur 2 mit geöffneten Mediensäulen 10;
- Fig. 4: eine im oberen Abschnitt der Mediensäule 10 einsetzbare Medienplattform 116, über die die Medienleitungen 91, 92, 93 vorteilhaft der Mediensäule 10 zugeführt und von dieser weggeführt werden können; und
- Fig. 5: die Medienplattform 116 von Figur 4 eingesetzt zwischen Deckenstützen 111 einer Mediensäule 10.

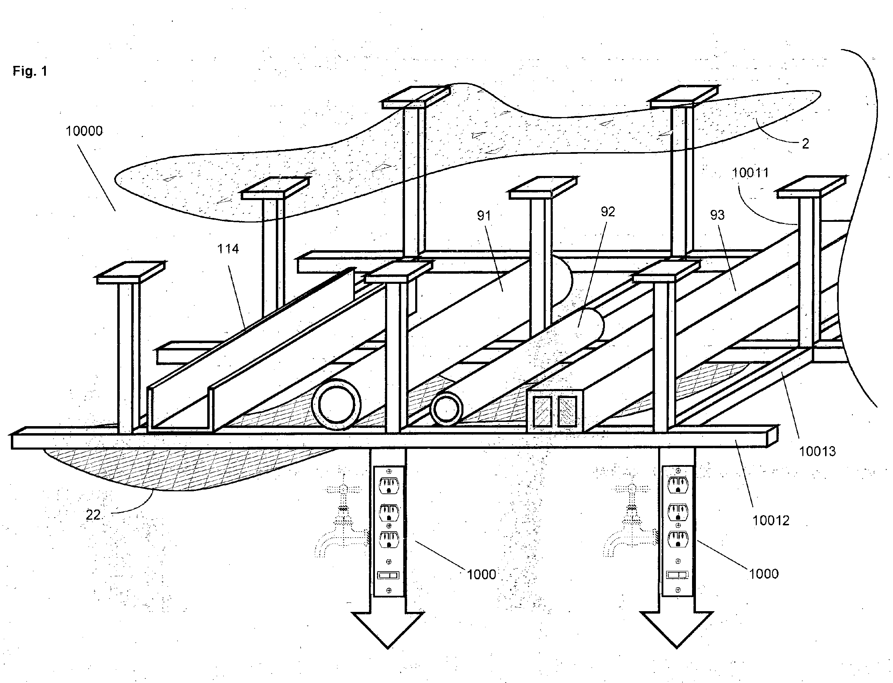

Figur 1 zeigt eine aus der EP 1684393 A1 bekannte Vorrichtung mit einer Deckenstruktur mit Längsstreben 10012 und Querstreben 10013, die über Deckenstützen 10111 mit einer Decke 2 verbunden sind und eine abgehängte Decke 22 halten. In dieser so genannten Mediendecke 10000 sind Medienleitungen 91, 92, 93 zu Mediensäulen 1000 geführt, die mit den Längsstreben 10012 oder Querstreben 10013 der Mediendecke 10000 verbunden sind. Die Mediendecke 10000 nimmt viel Raum in Anspruch während die Medien in den Mediensäulen 1000 konzentriert sind, die typischerweise von spezialisierten Herstellern geliefert und an ausgewählten Positionen an der Mediendecke 10000 montiert werden.

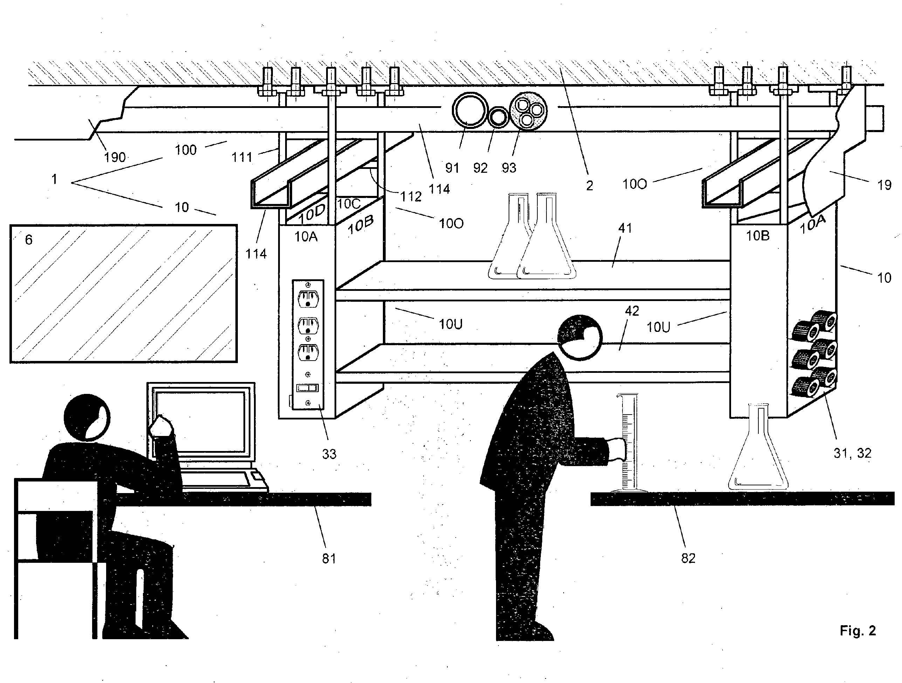

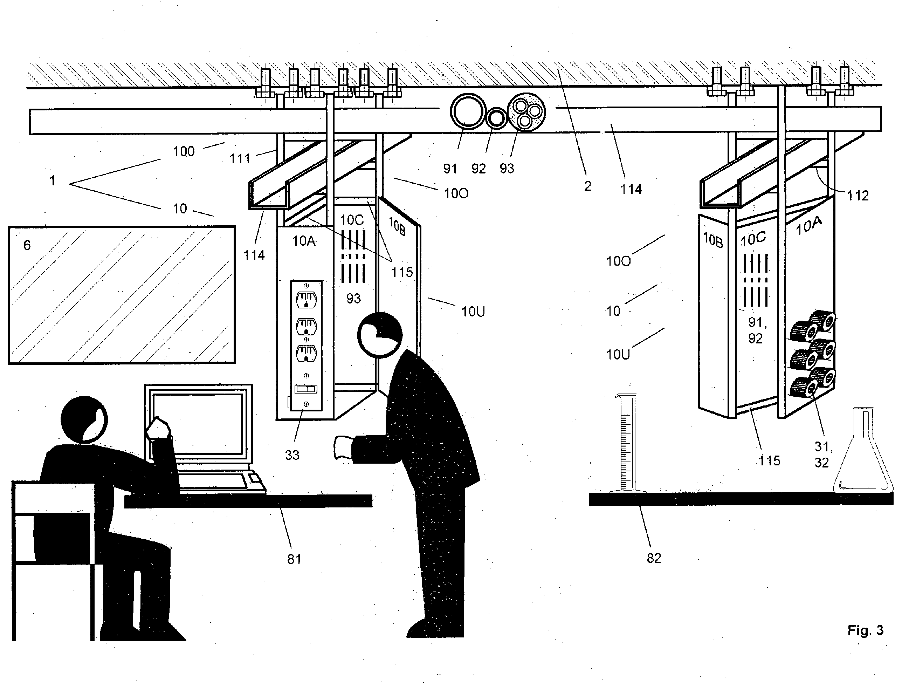

Figur 2 zeigt eine erfindungsgemässe Vorrichtung mit zwei dem Tragen von Medienkanälen 114 dienenden Mediensäulen 10, die je eine Säulenstruktur aufweisen, die mit der Decke 2 fest verbunden ist. Die Säulenstruktur besteht aus Längsstreben 111 und Querstreben 115 (siehe Figur 3), die miteinander fest oder lösbar gekoppelt, gegebenenfalls verschraubt oder verschweisst sind. Die Längsstreben 111 bilden gleichzeitig Deckenstützen, die eine mittels Schrauben mit der Decke 2 verbundene Kopfplatte aufweisen.

Jede Mediensäule 10 umfasst einen oberen Säulenabschnitt 100 über den der Mediensäule 10 die Medienleitungen 91, 92, 93 zugeführt werden und einen unteren Säulenabschnitt 10U, der mit mehreren Panelen 10A, 1OB, 10C, ... verkleidet ist, von denen eine erste Paneele 10A mit Anschlüssen 31; 32; 33 der Medienleitungen 91; 92; 93 versehen ist. Eine zweite Paneele 10B ist vorzugsweise schwenkbar mit der Säulenstruktur verbunden, so dass es in der Art eines Fensters geöffnet werden kann, um in den Innenraum der Mediensäule 10 eingreifen zu können. Der Installateur oder das Wartungspersonal kann daher mit wenigen Handgriffen in die Mediensäule 10 eingreifen, um die Medienleitungen 91; 92; 93 mit den Anschlüssen 31; 32; 33 zu verbinden oder Änderungen vorzunehmen, wie dies in Figur 3 gezeigt ist.

Im oberen Säulenabschnitt 100 ist die Säulenstruktur 111, 115 fest oder lösbar mit Auslegern 112 verbunden, auf die Medienkanäle 114 abgelegt sind, die der Führung der Medienleitungen 91, 92, 93 dienen. Der Begriff "Kanal" betrifft typischerweise U-Profil-förmige Kabelkanäle oder Kabelpritschen, aus Blech oder Gitter mit Längsstegen und Querstegen. Grundsätzlich werden durch diesen Begriff jedoch alle Strukturen erfasst, die zur Leitung von Medien oder zum Halten dafür vorgesehener Leitungen geeignet sind. Sofern diese genügend Eigenstabilität aufweisen, können z.B. auch Rohre direkt verlegt werden.

Typischerweise werden nur diejenigen Medienleitungen 91; 92; 93 zu einer Mediensäule 10 geführt, die dort mit den Anschlüssen 31; 32; 33 verbunden werden. Mediensäulen 10 werden erfindungsgemäss jedoch auch als Relaisstationen verwendet, über die Medienleitungen 91; 92; 93 zu weiteren Mediensäulen 10 geführt werden.

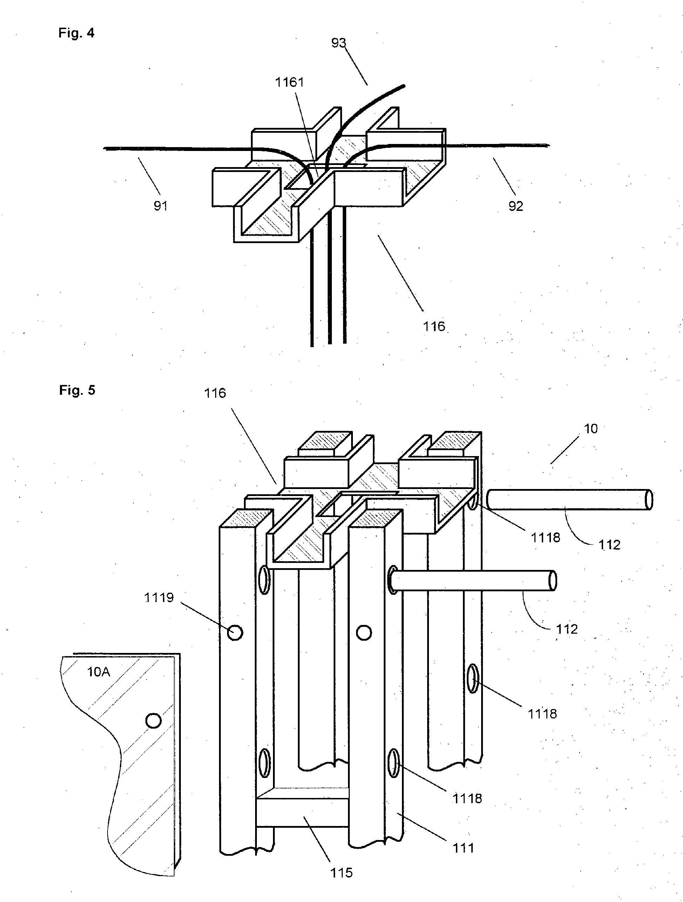

In Figur 1 ist gezeigt, dass die Medienkanäle 114 und Ausleger 112 in verschiedenen Ebenen montierbar sind. Da dies Raum in Anspruch nimmt, wird vorzugsweise eine mehrarmige Medienplattform 116 eingesetzt, wie sie in den Figuren 4 und 5 gezeigt ist. Die Medienplattform 116 erlaubt den Austausch und die Abzweigung von Medien in einer Ebene, so dass nur wenig Raum in Anspruch genommen wird. Sofern die Medien getrennt voneinander verlegt werden sollen, werden vorzugsweise zwei Medienplattformen 116 eingesetzt.

Die erste der beiden Mediensäulen 10 ist einem Arbeitsplatz 81 zugeordnet und weist die Form eines geraden Prismas mit vier Kanten auf, an denen Deckenstützen 111 vorgesehen sind. Die Säulenstruktur im unteren Säulenabschnitt 10U ist mit vier Panelen 10A, 10B, 10C und 10D verkleidet. An der ersten Paneele 10A sind elektrische Anschlüsse 33 vorgesehen. Beispielsweise sind Anschlüsse 33 für die Stromversorgung und für den Datentransfer vorgesehen.

Die zweite der beiden Mediensäulen 10 ist einem Arbeitsplatz 82 zugeordnet und weist die Form eines geraden Prismas mit einer dreieckigen Grundfläche und drei Kanten auf, an denen Deckenstützen 111 vorgesehen sind. Die Säulenstruktur im unteren Säulenabschnitt 10U ist mit drei Panelen 10A, 10B, und 10C verkleidet. An der ersten Paneele 10A sind Anschlüsse 31, 32 für flüssige und gasförmige Medien vorgesehen.

Die beiden Mediensäulen 10 sind daher streng nach Medien getrennt, weshalb bei der Installation und Wartung ein geringerer Aufwand resultiert und gleichzeitig Sicherheitsrisiken vermieden werden. Sollte eine elektrische Vorrichtung in der ersten Mediensäule schadhaft sein und beispielsweise einen Brand verursachen, so wäre ein Sicherheitsabstand zu gasförmigen Medien gewahrt. Bei der Verwendung einer Medienplattform 116 im oberen Säulenabschnitt 100 würde gleichzeitig eine Abschirmung nach oben resultieren, so dass eine Wärmeeinwirkung auf Gasleitungen erst mit starker Verzögerung eintreten würde.

In Figur 2 ist ferner gezeigt, dass die beiden Mediensäulen 10 vorteilhaft zum Halten von Regalen 41, 42 eingesetzt werden können. Der Anwender kann daher konventionelles Mobiliar, zum Beispiel einen Schrank 6, aber auch Mobiliar verwenden, das in Kombination mit den stabil installierten Mediensäulen 10 installiert wird. Dazu werden die Deckenstützen 111 oder die Panelen 10A; 10B; 10C; 10D von zwei benachbarten Mediensäulen 10 mit Montageelementen versehen, mittels derer Mobiliar installiert werden kann.

In Figur 2 ist weiter gezeigt, dass der obere Säulenabschnitt 100 und die Medienkanäle 114 je mit einer Verkleidung 19, 190 abgedeckt sind. Da die Medienkanäle 114 nur wenig Raum in Anspruch nehmen, resultiert ein vorteilhaftes Erscheinungsbild der Vorrichtung 1. Die Mediensäulen 10, die vorteilhaft ausgestaltet werden können, stehen im Vordergrund und stellen dem Anwender zahlreiche Funktionen zur Verfügung, die bedarfsweise erweitert werden können. Die Anschlusspaneele 10A kann auf Wunsch des Anwenders vorfabriziert und bestückt werden.

Figur 3 zeigt die Vorrichtung 1 von Figur 2 mit geöffneten Mediensäulen 10. Die Panelen 10B der beiden Mediensäulen 10 sind einseitig von einem Scharnier gehalten und können nach dem Lösen eines Verschlusses leicht geöffnet werden, um Installationsarbeiten oder Wartungsarbeiten vorzunehmen.

In Figur 3 ist ferner gezeigt, dass bei der ersten Mediensäule 10 elektrische Leitungen 93 und bei der zweiten Mediensäule 10 Leitungen 91, 92 für Flüssigkeiten und Gase in die Mediensäule 10 eingeführt werden. Ferner sind die Querstreben 115 der Säulenstruktur ersichtlich, die lösbar oder fest, gegebenenfalls nur eingehängt oder verschraubt, mit den Deckenstützen 111 verbunden sind.

Figur 4 zeigt die im oberen Abschnitt der Mediensäule 10 vorteilhaft einsetzbare Medienplattform 116, über die die Medienleitungen 91, 92, 93 vorteilhaft zu den Anschlüssen 31, 32, 33 der Mediensäule 10 zugeführt und von dieser weggeführt werden können.

Figur 5 zeigt die Medienplattform 116 von Figur 4 eingesetzt zwischen Deckenstützen 111 einer Mediensäule 10. Die Medienplattform 116 kann auf verschiedenen Ebenen anhand von zylinderförmigen Auslegern 112 montiert werden, die in entsprechende Öffnungen 1118 in denen Deckenstützen 111 eingesetzt werden. Während der Installation der Mediensäule 111 wird die Medienplattform 116 von den Auslegern 112 vorzugsweise auf einer unteren Ebene gehalten, damit dem Installateur Zugriff zu den Medienleitungen 91, 92, 93 gewährt wird, die direkt oder mittels abgezweigten Stichleitungen durch die Öffnung 1161 der Medienplattform 116 in die Mediensäule 10 eingeführt werden. Nach der Installation der Medienleitungen 91, 92, 93 wird die Medienplattform 116 wieder angehoben, um die Kabelkanäle 114 möglichst nahe bei der Decke 2 zu installieren. Die Ausleger 112 können auch ohne Verwendung der Medienplattform 116 vorteilhaft in der beschriebenen Weise eingesetzt werden.

### Literaturverzeichnis

[1] Dr. Gert Richter, Bernd Schoeler, Problemzonen im Labor, http://www.labo.de, Juli 2011
[2] DE 101 27 272 A1
[3] EP 1684393 A1
[4] EP 2262069 A2
[5] DE 10314685 A1
[6] EP 1916749 A2

## Patentansprüche

1. Vorrichtung (1) für die Medien- und Energieversorgung von Arbeitsplätzen in einem Labor umfassend wenigstens eine Mediensäule (10), die eine Säulenstruktur aufweist, die mit der Decke (2) des Labors verbunden ist und die einen oberen und einen unteren Säulenabschnitt (100, 10U) umfasst, wobei sich im oberen Säulenabschnitt (100) ein Medienkanal (114) mit Medienleitungen (91, 92, 93) befindet, von denen zumindest einzelne hinunter zu Anschlüssen (31, 32, 33) im unteren Säulenabschnitt (10U) geführt sind, der mit mehreren Paneelen (10A, 10B, 10C, ...) verkleidet ist, von denen eine erste Paneele (10A) mit den Anschlüssen (31, 32, 33) versehen ist, **dadurch gekennzeichnet, dass** die Säulenstruktur mit vorzugsweise wenigstens drei Deckenstützen (111) mit der Decke (2) des Labors verbunden ist, dass im oberen Säulenabschnitt (100) wenigstens ein Ausleger (112) mit der Säulenstruktur verbunden ist, der den Medienkanal (114) mit den Medienleitungen (91, 92, 93) trägt, und dass eine zweite der Paneelen (10B) lösbar, vorzugsweise schwenkbar mit der Säulenstruktur verbunden ist.

2. Vorrichtung (1) nach Anspruch 1, **dadurch gekennzeichnet, dass** die Säulenstruktur aus Querstreben (115) und Längsstreben besteht, die mit den Deckenstützen (111) vorzugsweise eine Einheit bilden.

3. Vorrichtung (1) nach Anspruch 1 oder 2, **dadurch gekennzeichnet, dass** einer oder mehrere Ausleger (112) einseitig an einer oder beidseitig je an einer Deckenstütze (111) fest oder lösbar befestigt und/oder dass einer oder mehrere Ausleger (112) einseitig an einer oder beidseitig je an einer Deckenstütze (111) lösbar befestigt in mehreren Ebenen montierbar sind.

4. Vorrichtung (1) nach Anspruch 1, 2 oder 3, **dadurch gekennzeichnet, dass** im oberen Säulenabschnitt (100) eine Medienplattform (116) vorgesehen ist, der die Medienleitungen (91, 92, 93) oder dafür vorgesehene Medienkanäle (114) zugeführt sind und die vorzugsweise anhand lösbarer Ausleger (112) in einer gewählten Höhe fixierbar sind.

5. Vorrichtung (1) nach einem der Ansprüche 1-4, **dadurch gekennzeichnet, dass** die Medienkanäle (114) aus Gittermaterial mit Längsstegen und Querstegen oder aus gegebenenfalls gelochtem Blech gefertigt und durch eine Verkleidung (190) abgedeckt sind.

6. Vorrichtung (1) nach einem der Ansprüche 1-5, **dadurch gekennzeichnet, dass** der obere Säulenabschnitt (100) der Mediensäule (10) durch eine Verkleidung (190) abgedeckt ist.

7. Vorrichtung (1) nach einem der Ansprüche 1-6, **dadurch gekennzeichnet, dass** im oberen Säulenabschnitt (100) der Mediensäule (10) wenigstens eine mehrarmige Medienplattform (18) angeordnet ist, auf der ankommende und abgehende Medienkanäle (114) abgelegt sind und die vorzugsweise wenigstens eine Öffnung (1161) aufweist, durch die Medienleitungen (91, 92, 93) in den unteren Säulenabschnitt (10U) geführt sind.

8. Vorrichtung (1) nach einem der Ansprüche 1-7, **dadurch gekennzeichnet, dass** zumindest der untere Säulenabschnitt (10U) die Form eines geraden Prismas aufweist, dessen Grundseite, die vorzugsweise durch eine Metallplatte gebildet wird, ein Dreieck, ein Rechteck oder ein Hexagon bildet und dessen Seitenflächen durch die Panelen (10A, 10B, 10C, 10D ...) gebildet werden.

9. Vorrichtung (1) nach Anspruch 8, **dadurch gekennzeichnet, dass** die Grundfläche ein Dreieck mit zwei gleichen Schenkeln bildet, die vorzugsweise einen Winkel von 90° einschliessen, wobei die dazwischen eingeschlossene grösste Paneele (10A) mit den Anschlüssen (31, 32, 33) versehen ist.

10. Vorrichtung (1) nach Anspruch 8 oder 9, **dadurch gekennzeichnet, dass** die benachbarten Panelen (10A, 10B; 10B, 10C; ...) durch Scharniere miteinander verbunden sind.

11. Vorrichtung (1) nach einem der Ansprüche 1 - 10, **dadurch gekennzeichnet, dass** Deckenstützen (111) oder Panelen (10A; 10B; 10C; 10D) von zwei benachbarten Mediensäulen (10) Montageelemente aufweisen, mittels derer Mobiliar, wie Regale (41, 42) gehalten sind.

12. Vorrichtung (1) nach einem der Ansprüche 1 - 11, **dadurch gekennzeichnet, dass** die Kopfstücke der Deckenstützen (111) mittels Schrauben oder über eine Verschiebevorrichtung mit der Decke (2) verbunden sind und/oder dass die Kopfstücke der Deckenstützen (111) über eine Montageplatte mit der Decke (2) verbunden sind.

13. Vorrichtung (1) nach einem der Ansprüche 1-12, **dadurch gekennzeichnet, dass** eine erste Mediensäule (10) vorgesehen ist, der ausschliesslich elektrische Medienleitungen (93) für die Energieversorgung und/oder die Datenkommunikation zugeführt werden, und dass eine zweite Mediensäule (10) vorgesehen ist, der ausschliesslich für Flüssigkeiten und Gase vorgesehene Medienleitungen (91; 92) zugeführt werden.

## Claims

1. Device (1) for supplying media and energy to workplaces in a laboratory comprising at least one media column (10), that has a columnar structure, that is connected to the ceiling (2) of the laboratory and that comprises an upper and a lower column section (100, 10U), wherein in the upper column section (100) a media channel (114) with media pipes (91, 92, 93) is arranged, of which at least individual ones are guided downwards to connections (31, 32, 33) in the lower column section (10U), which is encased with a plurality of panels (10A, 10B, 10C, ...), of which a first panel (10A) is provided with the connections (31, 32, 33), **characterised in that** the columnar structure is connected with preferably at least three ceiling supports (111) to the ceiling (2) of the laboratory, that in the upper column section (100) at least one cantilever beam (112) is connected to the columnar structure, which supports the media channel (114) with the media pipes (91, 92, 93), and that a second one of the panels (10B) is releasably, preferably pivotally connected to the columnar structure.

2. Device (1) according to claim 1, **characterised in that** the columnar structure consists of transvers bars (115) and longitudinal bars, which preferably form a unity with the ceiling supports (111).

3. Device (1) according to claim 1 or 2, **characterised in that** one or a plurality of cantilever beams (112) are mounted firmly or releasably one-sided at one or two-sided each at a ceiling support (111) and/or that one or a plurality of cantilever beams (112) are releasably mountable in a plurality of planes one-sided at one or two-sided each at a ceiling support (111).

4. Device (1) according to claim 1, 2 or 3, **characterised in that** in the upper column section (100) a media platform (116) is provided, to which the media pipes (91, 92, 93) or media channels (114) provided therefore are guided and which, preferably by means of releasable cantilever beams (112), can be fixed in a selected height.

5. Device (1) according to one of the claims 1-4, **characterised in that** the media channels (114) are made from grid material with longitudinal grid bars and transversal grid bars or from sheet material, that optionally is perforated, and are covered by a casing (190).

6. Device (1) according to one of the claims 1-5, **characterised in that** the upper column section (100) of the media column (10) is covered by a casing (190).

7. Device (1) according to one of the claims 1-6, **characterised in that** indie upper column section (100) of the media column (10) at least one media platform (18) with a plurality of arms is arranged, on which incoming and outgoing media channels (114) are seated and which preferably comprises at least one opening (1161), through which the media pipes (91, 92, 93) are guided into the lower column section (10U).

8. Device (1) according to one of the claims 1-7, **characterised in that** at least the lower column section (10U) exhibits the form of a right prism, whose base side, which preferably consists of a metal plate, forms a triangle, a rectangle or a hexagon and whose side surfaces are formed by the panels (10A, 10B, 10C, 10D, ...).

9. Device (1) according to claim 8, **characterised in that** the base side forms a triangle with two identical legs, which preferably enclose an angle of 90°, wherein the largest panel (10A) enclosed therein is provided with the connections (31, 32, 33).

10. Device (1) according to claim 8 or 9, **characterised in that** the neighbouring panels (10A, 10B; 10B, 10C; ...) Are connected with one another by hinges.

11. Device (1) according to one of the claims 1 - 10, **characterised in that** ceiling supports (111) or panels (10A; 10B; 10C; 10D) of two neighbouring media columns (10) comprise mounting elements, with which furnishings, such as shelves (41, 42) are held.

12. Device (1) according to one of the claims 1 - 11, **characterised in that** the head and members of the ceiling supports (111) are mounted to the ceiling (2) by means of screws or via a displacement device and/or that the head members of the ceiling supports (111) are connected to the ceiling (2) via a mounting plate.

13. Device (1) according to one of the claims 1-12, **characterised in that** a first media column (10) is provided, to which exclusively electrical media pipes (93) for the energy supply and/or the data communication are guided, and that a second media column (10) is provided, to which exclusively media pipes (91; 92) for liquids and gases are guided.

## Revendications

1. Dispositif (1) pour l'alimentation en énergie et en médias de postes de travail dans un laboratoire comprenant au moins une colonne des médias (10), qui présente une structure colonnaire, qui est reliée au plafond (2) du laboratoire et qui comprend une section supérieure et inférieure de colonne (100, 10U), dans la section supérieure de colonne (10o), un canal des médias (114) étant disposé lequel est muni de conduites de média (91, 92, 93) depuis au moins quelques-unes d'entre elles sont amenés des raccords (31, 32, 33) vers le bas dans la section inférieure de colonne (10U), qui est habillée de plusieurs panneaux (10A, 10B, 10C), dont un premier panneau (10A) est muni des raccords (31, 32, 33), **caractérisé en ce que** la structure colonnaire est reliée de préférence à au moins trois supports (111) au plafond (2) du laboratoire, **en ce que** dans la section supérieure de section de colonne (100), au moins une flèche (112) est reliée à la structure colonnaire, laquelle porte le canal des médias (114) et les conduites de média (91, 92, 93), et **en ce qu'**un des seconds panneaux (10B) est amovible, de préférence pivotant avec la structure colonnaire.

2. Dispositif selon la revendication 1, **caractérisé en ce que** la structure colonnaire se compose de traverses (115) et de longerons qui forment de préférence une unité avec les supports de plafond (111).

3. Dispositif (1) selon la revendication 1 ou 2, **caractérisé en ce qu'**une ou plusieurs **flèches** (112) sont fixées de manière fixe ou amovible d'un côté ou respectivement des deux côtés à un support de plafond (111) et/ou **en ce qu'**une ou plusieurs flèches (112) peuvent être montées et fixées dans plusieurs plans de manière amovible d'un côté ou de part et d'autres respectivement à un support de plafond (111).

4. Dispositif (1) selon la revendication 1, 2, 3, **caractérisé en ce que** dans la section supérieure de colonne (100), il est prévu une plate-forme des médias (116) à laquelle sont amenées les conduites de média (91, 92, 93) ou les canaux des médias (114) qui peuvent être fixés de préférence à une hauteur choisie à l'aide des flèches amovible (112).

5. Dispositif (1) selon l'une des revendications 1 à 4, **caractérisé en ce que** les canaux des médias (114) sont fabriqués en matériau de grille avec des segments longitudinaux et transversaux ou en tôle éventuellement perforée et sont recouverts par un habillement (190).

6. Dispositif (1) selon l'une des revendications 1 à 5, **caractérisé en ce que** la section supérieure de colonne (100) de la colonne des médias (10) est recouverte par un habillement (190).

7. Dispositif (1) selon l'une des revendications 1 à 6, **caractérisé en ce que** dans la section supérieure de colonne (100) de la colonne des médias (10), il est disposé au moins une plate-forme des médias (18) comprenant plusieurs bras sur laquelle sont déposés des canaux des médias entrant et sortant (114) et qui présentent de préférence au moins une ouverture (1161), à travers laquelle les conduites de média (91, 92, 93) sont amenées dans la section inférieure de colonne (10U).

8. Dispositif (1) selon l'une des revendications 1 à 7, **caractérisé en ce qu'**au moins la section inférieure de colonne (10U) présente la forme d'un prisme droit, dont la base de fond, qui est formée de préférence par une plaque métallique, réalise un triangle, un rectangle ou un hexagone et dont les surfaces latérales sont formées par les panneaux (10A, 10B, 10C, 10D,...).

9. Dispositif (1) selon la revendication 8, **caractérisé en ce que** la surface de base forme un triangle avec deux côtés égaux de formes, qui comprennent de préférence un angle de 90°, le plus grand panneau (10A) englobés entre les deux côtés étant munis de raccords (31, 32, 33).

10. Dispositif (1) selon la revendication 8 ou 9, **caractérisé en ce que** les panneaux voisins (10A, 10B ; 10B, 10C ; ...) sont reliés par des charnières.

11. Dispositif (1) selon l'une des revendications 1 à 10, **caractérisé en ce que** des supports de plafond (111) ou des panneaux (10A; 10B; 10C; 10D) de deux colonnes des médias (10) adjacentes présentent des éléments de montage au moyen desquels des meubles, tel que des étagères (41, 42), sont maintenus.

12. Dispositif (1) selon l'une des revendications 1 à 11, **caractérisé en ce que** les pièces de tête des supports de plafond (111) sont reliées au plafond (2) par des vis ou un dispositif coulissant et/ou les pièces de tête des supports de plafond (111) sont reliées au plafond (2) par une plaque de montage.

13. Dispositif (1) selon l'une des revendications 1 à 12, **caractérisé en ce qu'**il est prévu une première colonne des médias (10) qui est alimentée exclusivement par des conduites électriques (93) pour l'alimentation énergétique et/ou la communication de données et **en ce qu'**une seconde colonne des médias (10) est prévue pour alimenter des conduites de média (91; 92) prévues exclusivement pour des fluides et des gazs.
